# EUROPÄISCHE PATENTSCHRIFT

(11) **EP 2 870 370 B1**
(45) Veröffentlichungstag und Bekanntmachung des Hinweises auf die Patenterteilung: **08.02.2017**
(21) Anmeldenummer: 13733290.4
(22) Anmeldetag: 01.07.2013
(51) Int. Cl.: F16C 7/06, F02B 75/04

(54) **LÄNGENVERSTELLBARE PLEUELSTANGE**
CONNECTING ROD WITH ADJUSTABLE LENGTH
BIELLE AVEC LONGUEUR VARIABLE

(30) Priorität: 03.07.2012 AT 502622012; 02.04.2013 AT 502202013
(43) Veröffentlichungstag der Anmeldung: 13.05.2015
(73) Patentinhaber: AVL List GmbH, 8020 Graz (AT)
(72) Erfinder: MELDE-TUCZAI, Helmut, A-8042 Graz (AT); HOEDL, Bernhard, A-8051 Graz (AT); ZURK, Andreas, A-8481 Weinburg (AT); SCHOEFFMANN, Wolfgang, A-9300 St. Veit/Glan (AT)
(74) Vertreter: Babeluk, Michael
(86) Internationale Anmeldenummer: PCT/EP2013/063812
(87) Internationale Veröffentlichungsnummer: WO 2014/005984

(56) Entgegenhaltungen:
- EP-A1- 1 243 773
- CN-A- 101 109 321
- DE-A1- 10 151 516
- US-A- 4 140 091

## Beschreibung

Die Erfindung betrifft eine längenverstellbare Pleuelstange für eine Hubkolbenmaschine, insbesondere Brennkraftmaschine, mit zumindest einem ersten und einem zweiten Stangenteil, welche beiden Stangenteile teleskopartig zu- und/ oder ineinander verschiebbar sind, wobei der zweite Stangenteil einen Führungszylinder und der erste Stangenteil ein im Führungszylinder längsverschiebbares Kolbenelement ausbildet, wobei zwischen dem ersten und dem zweiten Stangenteil ein Hochdruckraum aufgespannt ist, in den zumindest ein erster Ölkanal einmündet.

Die DE 101 51 517 A1 beschreibt eine Kolben- und Pleuelstangenanordnung mit variabler Länge zur Erzeugung eines variablen Verdichtungsverhältnisses in einem Verbrennungsmotor, mit einem ersten Teil und einem zweiten Teil, die mit einem Längenänderungsmechanismus gekoppelt sind, der zwischen den Teilen aufgenommen ist. Der Längenänderungsmechanismus weist eine kegelstumpfförmige Federscheibe und eine elastomere Masse auf, die an einer konkaven Fläche der Federscheibe anliegt.

Die US 4 140 091 A zeigt eine längenverstellbare Pleuelstange nach dem Oberbegriff des Anspruchs 1.

Weitere Pleuelstangen mit jeweils einem hydraulischen teleskopartigen Mechanismus zur Verstellung der Pleuellänge sind aus den Druckschriften FR 2 857 408 A1, EP 1 243 773 A1, WO 02/10568 A1, DE 198 35 146 A1, US 4 370 901 A, US 4 195 601 A, US 4 124 002 A und US 2 134 995 A bekannt.

Durch Ändern der Verdichtung kann Volllast mit geringerem Verdichtungsverhältnis, und Teillast und Starten mit erhöhtem Verhältnis gefahren werden. Dabei wird im Teillastbereich der Verbrauch verbessert, beim Start der Kompressionsdruck mit dem erhöhtem Verdichtungsverhältnis gesteigert und bei hoher Leistung der Spitzendruck mit verringertem Verhältnis reduziert, sowie Klopfen verhindert.

Es ist bekannt, zur Verstellung des Verdichtungsverhältnisses einen exzentrischen Kolbenbolzen oder einen exzentrischen Hubzapfen der Kurbelwelle einzusetzen. Weiters ist es bekannt, zur Veränderung des Verdichtungsverhältnisses den ganzen Zylinderblock zu heben oder die gesamte Kurbelwellenlagerung mit einer exzentrischen Lagerung derselben im Kurbelgehäuse zu senken.

All diese Vorschläge setzen einen hohen konstruktiven und steuerungstechnischen Aufwand voraus.

Aufgabe der Erfindung ist es, diese Nachteile zu vermeiden und eine einfache und zuverlässige Lösung für die Änderung des Verdichtungsverhältnisses bereitbereitzustellen. Insbes. sollen sich die beiden Stangenteile zuverlässig relativ zueinander fixieren lassen, ohne dass es zu leckagebedingten Problemen kommt.

Erfindungsgemäß wird dies dadurch erreicht, dass die beiden Stangenteile in zumindest einer vorzugsweise einer minimalen Länge der Pleuelstange entsprechenden Stellung durch eine Sperreinrichtung relativ zueinander fixierbar sind.

Die variable Verdichtung wird erreicht, indem die Stangenlänge bei Niedriglast größer und bei höherer Last kleiner wird. Damit ergeben sich je nach Last höhere oder niedrigere Verdichtungsverhältnisse. Der Effekt ist, dass bei niedriger Last das höhere Verdichtungsverhältnis den Wirkungsgrad steigen lässt und bei höherer Last der Spitzendruck nicht zu hoch wird. Die Verstellung erfolgt über den Öldruck der Brennkraftmaschine.

Dabei kann in der Hochlastphase das Kolbenelement von seiner unteren Position angehoben werden, was zu Unterdruck und damit Kavitationserscheinungen im Hochdruckraum führen kann.

Um Kavitationserscheinungen zu vermeiden, werden die beiden Stangenteile in der der minimalen Länge der Pleuelstange entsprechenden Stellung durch die Sperreinrichtung relativ zueinander fixiert. Erfindungsgemäß weist die Sperreinrichtung dabei ein bewegliches Anschlagelement auf, welches quer zur Pleuelstangenachse in einer Querbohrung des Kolbenelementes vorzugsweise entgegen der Kraft einer Rückstellfeder verschiebbar angeordnet ist. Das Anschlagelement weist erfindungsgemäß eine bezüglich einer Normalebene auf die Pleuelachse geneigte Keilfläche auf, welche mit einer vorzugsweise parallel zur Keilfläche ausgebildeten Gegenfläche des Kolbenelementes zusammenwirkt, wobei vorzugsweise die Keilfläche dem Hochdruckraum zugewandt ist.

Zur Betätigung des Anschlagelementes ist es vorteilhaft, wenn das Anschlagelement einen in einem Zylinder verschiebbar gelagerten Anschlagkolben aufweist oder mit diesem verbunden ist, wobei zwischen Anschlagkolben und Anschlagzylinder ein über zumindest eine Füllbohrung mit Öl beaufschlagbarer Druckraum ausgebildet ist.

In einer bevorzugten Ausführung der Erfindung ist vorgesehen, dass die Keilfläche geteilt ausgeführt ist und zwei in Richtung der Achse der Querbohrung nebeneinanderliegende parallele Teilkeilflächen aufweist, wobei zwischen den beiden Teilkeilflächen ein Absatz ausgebildet ist. Das Kolbenelement stützt sich in der entriegelten Stellung mit seiner Gegenfläche an der zur ersten Teilkeilfläche parallelen zweiten Teilkeilfläche ab, wodurch die Flächenpressung durch Massenkraft relativ klein gehalten werden kann.

Um Bauraum zu sparen und die Pleuelstange möglichst kompakt auszuführen, ist es besonders vorteilhaft, wenn die axiale Erstreckung der Keilfläche bzw. zumindest einer Teilkeilfläche und/oder der Gegenfläche - vorzugsweise um mindestens 1/4, besonders vorzugsweise mindestens 1/3 - geringer ist, als die Dicke des Kolbenelementes, beides gemessen in Richtung der Achse der Querbohrung. Dies ermöglicht es, die Abmessungen der Rückstellfeder und den Kolbenweg des Anschlagkolbens sehr klein zu halten, wodurch ein erforderlicher Sicherheitsabstand zur umgebenden Zylinderfläche eingehalten werden kann.

Weiters kann der Druckraum mit zumindest einer Ablaufbohrung verbunden sein.

In einer Variante der Erfindung ist die Achse der Querbohrung normal zu einer normal zu den Pleuelaugenachsen ausgebildeten Pleuelschwingebene - vorzugsweise normal zur Längsachse der Pleuelstange - angeordnet. Dies ermöglicht einen großen Freiraum zum umgebenden Zylinder in der Schwingebene.

Steht normal zur Schwingebene - also in Richtung der Pleuelaugenachsen wenig Freiraum beispielsweise aufgrund der rotierenden Kurbelwangen der Kurbelwelle zur Verfügung, so kann es vorteilhaft sein, die Achse der Querbohrung in der Schwingebene der Pleuelstange - vorzugsweise normal zur Längsachse der Pleuelstange anzuordnen.

Vorteilhafter Weise ist die Querbohrung im das kleine Pleuelauge aufweisenden oberen Drittel der Pleuelstange angeordnet. Dies bewirkt besonders kleine Auslenkungen des Anschlagelementes.

Um eine einfache Steuerung der Änderung des Verdichtungsverhältnisses zu ermöglichen, ist im ersten Ölkanal zumindest ein Ventil, vorzugsweise ein Steuerventil, angeordnet, welches vorzugsweise eine erste Stellung und eine zweite Stellung aufweist, wobei in der ersten Stellung der erste Ölkanal geschlossen, und in der zweiten Stellung der erste Ölkanal geöffnet ist.

In einer einfachen Ausführungsvariante der Erfindung ist vorgesehen, dass das Ventil als Kugelventil mit einer Ventilkugel und einem in einer Aufnahmebohrung axial verschiebbaren Kolbenbolzen ausgebildet ist, welcher samt Ventilkugel durch eine Rückstellfeder in eine erste Stellung und durch Öldruck entgegen der Kraft der Rückstellfeder in eine zweite Stellung verschiebbar ist.

Alternativ dazu kann auch vorgesehen sein, dass das Ventil als Steuerventil mit einem in einer Aufnahmebohrung axial verschiebbaren Stellkolben ausgebildet ist, welcher durch eine Rückstellfeder in eine erste Stellung und durch Öldruck entgegen der Kraft der Rückstellfeder in eine zweite Stellung verschiebbar ist, wobei vorzugsweise in der ersten Stellung der erste Ölkanal geschlossen und in der zweiten Stellung geöffnet ist.

Eine einfache Steuerung ergibt sich, wenn der erste Ölkanal als Zu- und Abflusskanal ausgebildet ist, wobei vorzugsweise in den Hochdruckraum ein als Zuführkanal ausgebildeter zweiter Ölkanal einmündet, in welchem ein in Richtung des Hochdruckraumes öffnendes Rückschlagventil angeordnet ist.

In die Aufnahmebohrung mündet ein vorzugsweise mit dem Pleuellager strömungsverbundener Ölversorgungskanal ein, wobei besonders vorzugsweise im Ölversorgungskanal eine Drosselstelle angeordnet ist. Dadurch kann eine beim Ansaugen durch die Massenkraft des ersten Stangenteils entstehende Unterdruckwelle in Bezug auf das Öl im Pleuellager abgeschwächt werden. Dabei kann der zweite Ölzuführkanal von der Aufnahmebohrung des Steuerventils oder vom Ölversorgungskanal ausgehen.

In einer fertigungstechnisch einfachen Ausführungsform der Erfindung ist vorgesehen, dass die Aufnahmebohrung durch eine Bohrung quer zur Längsachse der Pleuelstange gebildet ist. Eine besonders kompakte Ausführung lässt sich erzielen, wenn das Ventil im Bereich eines großen Pleuelauges der Pleuelstange angeordnet ist.

Eine einfache Steuerung des Anschlagelementes wird erreicht, wenn die Füllbohrung durch den Stellkolben des Steuerventils steuerbar ist, wobei die Füllbohrung in der zweiten Stellung des Stellkolbens aufgesteuert und in der ersten Stellung des Stellkolbens geschlossen ist.

Besonders vorteilhaft ist es, wenn die Ablaufbohrung durch den Stellkolben des Steuerventils steuerbar ist, wobei die Ablaufbohrung in der ersten Stellung des Stellkolbens aufgesteuert und in der zweiten Stellung des Stellkolbens geschlossen ist.

Die Erfindung wird im Folgenden anhand der Figuren näher erläutert. Es zeigen
- Fig. 1: eine erfindungsgemäße Pleuelstange in einer ersten Ausführungsvariante in einem Schnitt gemäß der Linie I - I in Fig. 2 in einer ersten Schaltstellung;
- Fig. 2: diese Pleuelstange in einem Schnitt gemäß der Linie II - II in Fig. 1;
- Fig. 3: diese Pleuelstange in verriegelter Stellung in einem Schnitt gemäß der Linie III - III in Fig. 1;
- Fig. 4: die Pleuelstange in einem Schnitt analog zur Fig. 1 während einer zweiten Schaltstellung;
- Fig. 5: einen Teilausschnitt des Längsschnittes der Pleuelstange analog zu Fig. 2 in einer zweiten Schaltstellung in entriegelter Stellung;
- Fig. 6: eine erfindungsgemäße Pleuelstange in einer zweiten Ausführungsvariante in einem Schnitt gemäß der Linie VI - VI in Fig. 7 in einer ersten Schaltstellung in verriegelter Stellung;
- Fig. 7: diese Pleuelstange in einem Schnitt gemäß der Linie VII - VII in Fig. 6;
- Fig. 8: diese Pleuelstange in einem Schnitt gemäß der Linie VIII - VIII in Fig. 6;
- Fig. 9: diese Pleuelstange in einem Schnitt gemäß der Linie IX - IX in Fig. 6;
- Fig. 10: eine erfindungsgemäße Pleuelstange in einer dritten Ausführungsvariante in einem Schnitt analog zu Fig. 6 in einer ersten Schaltstellung in verriegelter Stellung und
- Fig. 11: diese Pleuelstange in einer zweiten Schaltstellung in entriegelter Stellung.

Funktionsgleiche Teile sind in den Ausführungsbeispielen mit gleichen Bezugszeichen versehen.

In den Fig. ist jeweils eine zweigeteilte Pleuelstange 1 einer Brennkraftmaschine dargestellt. Im oberen ersten Stangenteil 2 ist ein zylindrisches Kolbenelement 3 eingepresst. Der untere Teil dieses Kolbenelementes 3 sitzt mit Spielsitz in einem Führungszylinder 4a des unteren zweiten Stangenteils 4 der Pleuelstange 1, wobei zwischen dem Kolbenelement 3 und dem zweiten Stangenteil 4 in zumindest einer Lage der beiden Stangenteile 2, 4 ein Hochdruckraum 4b aufgespannt wird. Eine an den Hochdruckraum 4b grenzende druckseitige untere Stirnfläche 5 des Kolbenelementes 3 kann mit Motoröl beaufschlagt werden. Die Ölzufuhr und der Ablauf erfolgen über eine Bohrung, die als erster Ölkanal 10 fungiert. Die Ölzufuhr, Sperre und Ablauf des Öles wird von einem Steuerventil 6 über den Öldruck an der nicht weiter dargestellten Ölpumpe mittels eines ebenfalls nicht dargestellten Druckregelventils gesteuert. Ein nicht dargestellter Aktuator spannt eine Feder im Regelventil der Ölpumpe mehr oder weniger vor. Die Längsachse der Pleuelstange 1 ist mit 1a bezeichnet.

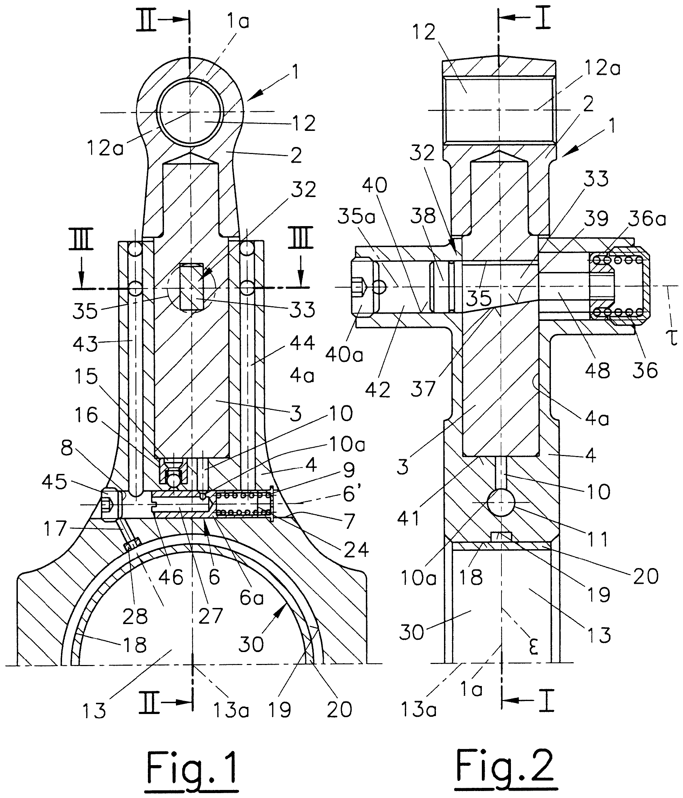

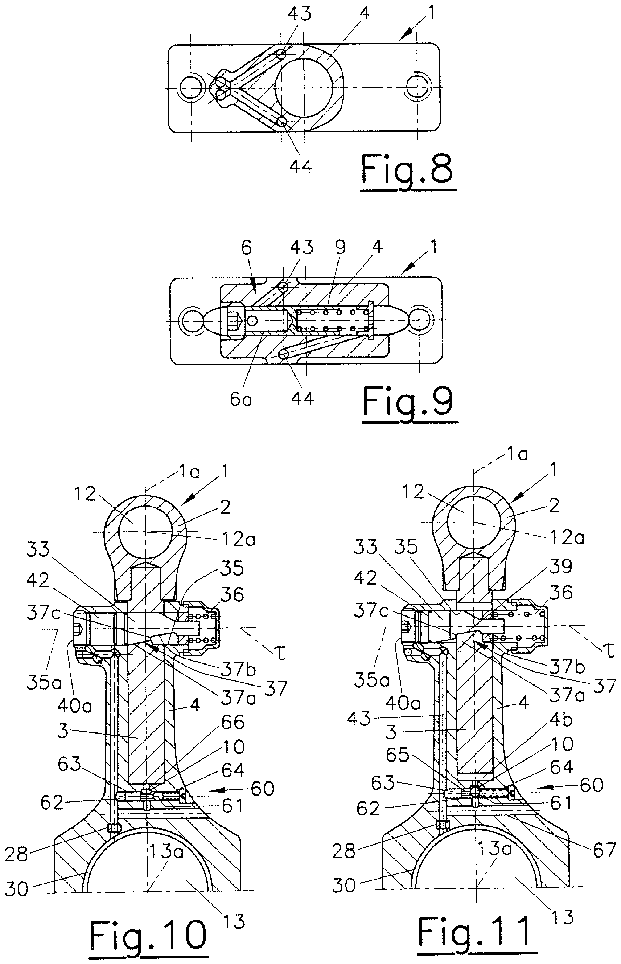

Grundsätzlich kann das Steuerventil 6 beliebig ausgeführt sein. Nachfolgend sind zwei Ausführungsbeispiele näher beschrieben. Das Steuerventil 6 kann - wie in den Fig. 1 bis Fig. 9 gezeigt - mit einem in einer Aufnahmebohrung 7 axial verschiebbaren Stellkolben 6a ausgebildet sein. Es ist aber auch möglich, alternativ dazu das Steuerventil 6 als Kugelventil 60 mit einer Ventilkugel 61 und einem in einer Aufnahmebohrung 62 axial verschiebbaren Zylinderbolzen 63 auszubilden, wie Fig. 10 und Fig. 11 zeigen und im Folgenden im Detail noch beschrieben wird.

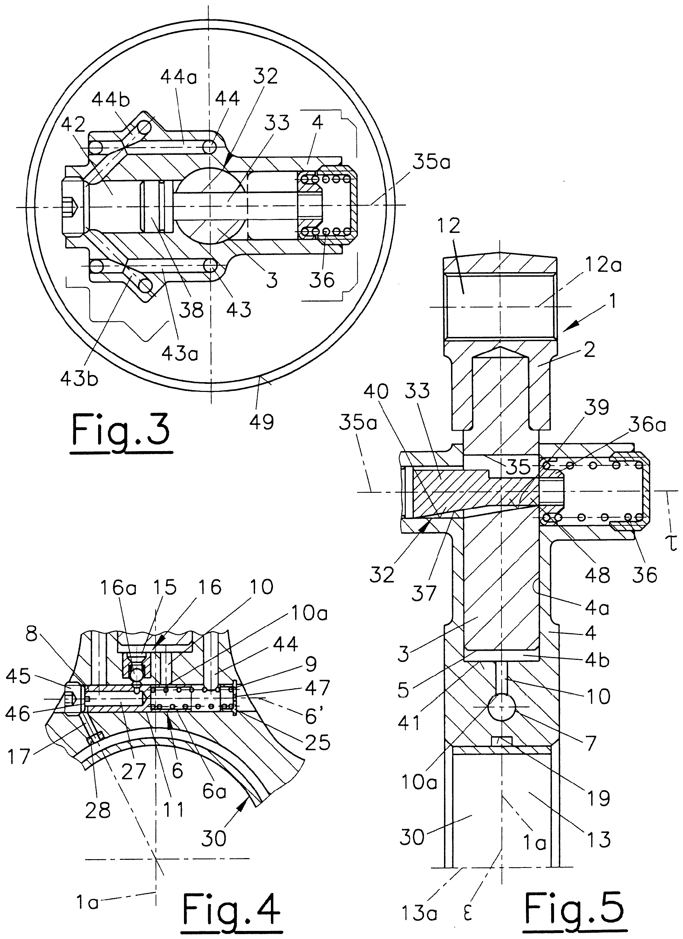

Fig. 1 und Fig. 2 zeigt die Pleuelstange 1 in einer ersten Ausführungsvariante in einer einem niedrigen Verdichtungsverhältnis zugeordneten ersten Stellung und Fig. 4 und Fig. 5 in einer einem hohen Verdichtungsverhältnis zugeordneten zweiten Stellung.

Der Stellkolben 6a im Steuerventil 6 gemäß dem ersten Ausführungsbeispiel ist mit einem Zylindermantel 11 mit einer inneren Bohrung 27 ausgeführt und zusammen mit einer Rückstellfeder 9 in der Aufnahmebohrung 7 angeordnet. Die Aufnahmebohrung 7 weist einen ersten Anschlag 8 und einen zweiten Anschlag 24 auf. Der erste Anschlag 8 wird dabei von einer Verschlussschraube 45 und zumindest einem Vorsprung 46 an der Stirnseite des Stellkolbens 6a gebildet.

Der Stellkolben 6a wird in seiner durch eine Bohrung quer zur Längsachse 1a der Pleuelstange 1 gebildeten Aufnahmebohrung 7 durch die Kraft der Rückstellfeder 9 bei niedrigem Öldruckniveau gegen den ersten Anschlag 8 gedrückt, wie aus Fig. 4 ersichtlich ist. Die Formulierung "Bohrung quer zur Längsachse" umfasst hier sowohl Bohrungen normal zur Längsachse 1a, als auch Bohrungen, welche unter einem gewissen Winkel zur Längsachse 1a geneigt sind. Das Motoröl wird von der Massenkraft über ein in einem zweiten Ölkanal 15 angeordnetes Rückschlagventil 16 (umfasst im dargestellten Ausführungsbeispiel z.B. eine kleine Kugel 16a) unter die Stirnfläche 5 des Kolbens 3 angesaugt. Der Stellkolben 6a sperrt mit seinem Zylindermantel 11 den eine Zu- und Ablauföffnung bildenden ersten Ölkanal 10. Das angesaugte Öl kann nicht entweichen und ist nicht kompressibel. Als Folge wird das Kolbenelement 3 gehoben und die Pleuelstange 1 somit länger. Auf diese Weise kann ein höheres Verdichtungsverhältnis bei normalem und niedrigem Öldruck eingestellt werden.

Wird nun der Regeldruck der Ölpumpe erhöht, wird der Stellkolben 6a, wie in Fig. 1 dargestellt ist, in seiner Aufnahmebohrung 7 vom Motoröl gegen den zweiten Anschlag 24 gedrückt, welcher von der Federführung 25 gebildet ist. Die Rückstellfeder 9 wird dabei zusammengedrückt. Eine Verbindungsöffnung 10a des ersten Ölkanals 10 für das Motoröl aus dem Pleuellager 30 zur Stirnfläche 5 wird durch den Stellkolben 6a geöffnet. In dieser Stellung drückt der Gasdruck aus dem nicht weiter ersichtlichen Brennraum das Kolbenelement 3 ganz nach unten, wodurch sich ein kleineres Verdichtungsverhältnis einstellt. Dabei drückt die Stirnfläche 5 des Kolbenelements 3 das Motoröl aus dem Hochdruckraum 4b.

Besonders vorteilhaft ist, dass auch in einem unteren Leerlaufbereich der Brennkraftmaschine, wenn der Motoröldruck kleiner als der Regeldruck ist, ein höheres Verdichtungsverhältnis eingestellt werden kann, was den Verbrauch im Niederlastbereich verbessert und einen Kaltstart erleichtert. Um das hohe Verdichtungsverhältnis über längere Zeit beizubehalten, müssen die Leckageverluste durch den Spielsitz des Führungszylinders 4a aus dem Hochdruckraum 4b unter der Stirnfläche 5 des Kolbenelementes 3 in den selben wieder nachgefüllt werden. Dies geschieht dadurch, dass die Massenkraft das Motoröl aus der inneren Bohrung 27 des Stellkolbens 6a über das Rückschlagventil 16 (Nachfüllventil) in den Hochdruckraum 4b unter der Stirnfläche 5 ansaugt. Beim nachfolgenden Verdichtungstakt baut sich der Hochdruck wieder auf und die kleine Kugel 16a im Rückschlagventil 16 verhindert das Entweichen des Öles aus dem Hochdruckraum 4b. Dieser Vorgang wiederholt sich bei jedem Arbeitszyklus. Will man das Verdichtungsverhältnis wieder senken, wird der Regeldruck der Ölpumpe erhöht und der Stellkolben 6a vom Öldruck gegen den zweiten Anschlag 24 gedrückt und die Verbindungsöffnung 10a zum Pleuellager 30 somit geöffnet. Der Gasdruck drückt das Kolbenelement 3 nach unten und das niedrigere Verdichtungsverhältnis ist wieder eingestellt. Der Stellkolben 6a wird in seiner Aufnahmebohrung 7 vom Öldruck und der Rückstellfeder 9 zwischen den Anschlägen 8 bei niedrigem Öldruck und 24 bei hohem Öldruck hin- und hergeschoben.

Die Ölversorgung der Aufnahmebohrung 7 des Stellkolbens 6a und seiner inneren Bohrung 27 erfolgt über einen Ölversorgungskanal 17. Diese mündet in eine Nut 19, in der Grundbohrung 18 der Pleuellagerschale 20 des Pleuellagers 30. Diese Nut 19 in der Pleuelstange 1 ist mit einer Nut in der nicht weiter dargestellten Unterschale des Pleuellagers 30 strömungsverbunden.

Um die Unterdruckwelle, die beim Ansaugen durch die Massenkraft entsteht, gegenüber dem Öl in der Nut 19 abzuschwächen, wird eine Drossel 28 in der Versorgungsbohrung 17 eingebaut.

In allen Ausführungsvarianten können die beiden Stangenteile 2, 4 durch eine erfindungsgemäße Sperreinrichtung 32 in einer der minimalen Länge der Pleuelstange 1 entsprechenden Stellung fixiert werden. Die Sperreinrichtung 32 weist dazu ein Anschlagelement 33 mit Anschlagkolben 38 auf, wobei das Anschlagelement 33 in einer Querbohrung 35 des Kolbenelementes 3 entgegen der Kraft einer Anschlagrückstellfeder 36 verschiebbar angeordnet ist. Der Anschlagkolben 38 ist in einem Anschlagzylinder 40 verschiebbar gelagert, wobei zwischen Anschlagkolben 38 und Anschlagzylinder ein über zumindest eine Füllbohrung 43, 43a, 43b mit Öl beaufschlagbarer Druckraum 42 ausgebildet ist. Mit 40a ist eine den Anschlagzylinder 40 verschließende Verschlussschraube bezeichnet.

Das bewegliche Anschlagelement 33 ist an seiner dem Hochdruckraum 4b zugewandten Unterseite mit einer zu einer Normalebene τ auf die Längsachse 1a der Pleuelstange 1 geneigten Keilfläche 37 ausgestattet, die eine Neigung aufweist, die etwas größer als die der Selbsthemmung ist. Diese Keilfläche 37 drückt aktiv durch den erhöhten Öldruck bei höherer Last über den im Anschlagzylinder 40 verschiebbar geführten Anschlagkolben 38 gegen die - im Ausführungsbeispiel entsprechend der Keilfläche 37 keilförmig geformte, dem Druckraum 42 abgewandte - Gegenfläche 39 des Kolbenelementes 3 und dieses somit gegen den durch den Boden 41 des Hochdruckraumes 4b gebildeten Endanschlag. In dieser Endstellung wird der im Ausführungsbeispiel durch eine Grundfläche des Anschlagzylinders 40 und einer dieser zugewandten Stirnseite des Anschlagkolbens 38 gebildete Druckraum 42 durch den Anschlagkolben 38 über die Füllbohrungen 43, 43a, 43b mit der ölführenden Nut 19, 22 im Pleuellager 30 verbunden. Der Stellkolben 6a des Steuerventils 6 wird dabei vom Öldruck gegen den zweiten Anschlag 24 der Federführung 25 der Rückstellfeder 9 gepresst. Der Stellkolben 6a gibt dabei die Füllbohrung 43 frei und verschließt die Ablaufbohrung 44 aus dem Druckraum 42. Mit 40a ist eine Verschlussschraube bezeichnet.

Im Falle der Leichtlast wird der Öldruck gesenkt. Dabei schiebt die Rückstellfeder 9 den Stellkolben 6a nach links gegen den ersten Anschlag 8, der von der Verschlussschraube 45 und zumindest einem Vorsprung 46 an der Stirnseite des Stellkolbens 6a gebildet wird. In dieser Stellung versperrt er die Füllbohrung 43 und gibt die Ablaufbohrung 44 frei. Das Öl gelangt nun aus dem Druckraum 42 über die Bohrungen 44, 44a und 44b und die Öffnung 47 in der Federführung 25 (bzw. Federteller) in das - nicht dargestellte - drucklose Motorinnere. Dabei kann sich die Anschlagrückstellfeder 36 wieder ausdehnen und schiebt über den Federteller 36a das bewegliche Anschlagelement 33 in der Fig. 2 nach links, solange bis der Federteller 36a am Kolbenelement 3 ansteht, wie in Fig. 5 ersichtlich ist. In dieser Stellung wird die Keilfläche 37 vom Kolbenelement 3 weggeschoben und das Kolbenelement 3 wird vom Öl, das durch die Massenkraft angesaugt wird angehoben bis er an einem zylindrischen Teil 48 des beweglichen Anschlageelementes 33 anliegt. Damit ergibt sich eine längere Pleuelstange 1 und ein höheres Verdichtungsverhältnis wird eingestellt.

In der in Fig. 10 und Fig. 11 gezeigten Ausführung ist die Keilfläche 37 geteilt ausgeführt und weist zwei in Richtung der Achse 35a der Querbohrung 35 nacheinander angeordnete, parallel zur Gegenfläche 39 ausgebildete Teilkeilflächen 37a, 37b auf, wobei zwischen den beiden Teilkeilflächen ein Absatz 37c ausgebildet ist. Der Absatz 37c bildet einen spannungsarmen Übergang zwischen den beiden Teilkeilflächen 37a, 37b. Das Kolbenelement 3 stützt sich in Fig. 11 mit seiner Keilfläche 39 an einer zur ersten Teilkeilfläche 37a benachbarten zweiten Teilkeilfläche 37b ab. Dadurch kann eine zu hohe Flächenpressung durch die Massenkraft in der in Fig. 11 dargestellten entriegelten Stellung vermieden werden. Wenn das Anschlagelement 33 im Falle der niedrigen Verdichtung das Kolbenelement 3 festhält, schiebt das Anschlagelement 33 solange in axiale Richtung (bzw. in Richung der Achse 35a der Querbohrung 35), bis ein Kraftschluss zwischen der Keilfläche 37a und dem Kolbenelement 3 einerseits und dem Kolbenelement 3 und dem Boden 41 des Hochdruckraumes 4b andererseits erreicht ist. Im Falle der hohen Verdichtung wird das Anschlagelement 33 von der Anschlagrückstellfeder 36 bis gegen die Verschlussschraube 40a der Bohrung 40 gedrückt, oder das Anschlagelement 33 wird soweit verschoben, bis der Federteller 36a am Kolbenelement 3 ansteht. Das Kolbenelement 3 wird jetzt vom Öldruck gegen die Keilfläche 37b gedrückt.

Wenn die Last wieder steigt, wird über einen nicht dargestellten Stellmotor das nicht weiter dargestellte Druckregelventil des Ölkreislaufes verstellt und der Öldruck erhöht. Damit wird der Stellkolben 6a des Steuerventils 6 wieder nach rechts gegen den zweiten Anschlag 24 gedrückt. Damit gibt er wieder die Füllbohrung 43 frei und die Ablaufbohrung 44 wird verschlossen.

Der Druck steigt im Druckraum 42 und das bewegliche Anschlagelement 33 wird nach rechts geschoben bis die Keilfläche 37 das Kolbenelement 3 wieder gegen den durch den Boden 41 des Hochdruckraumes 4b gebildeten Endanschlag drückt. In dieser Stellung ist die Pleuelstange 1 kürzer und ein der höheren Last angepasstes niedrigeres Verdichtungsverhältnis wird eingestellt.

Die Position des beweglichen Anschlagelementes 33 ist so hoch wie möglich unterhalb des an den Brennraum grenzenden Kolbens (nicht dargestellt) gewählt. Die Ausrichtung der Achse 35a der Querbohrung 35 kann rechtwinkelig zur Schwingebene ε der Pleuelstange 1 sein, wie in den Fig. 1 bis Fig. 5 dargestellt ist. Damit ergibt sich eine kleinere Auslenkung des Anschlagelementes 33 als an einer tiefer liegenden Position und einer anderen Ausrichtung der Achse 35a. Für den Fall, dass sich die Unterkante des Kolbenhemdes eines nicht weiter dargestellten Kolbens oberhalb des beweglichen Anschlageselementes 33 befindet, stellt die Linie 49 in Fig. 3, Fig. 6 und Fig. 7 die kleinste mögliche Zylinderbohrung dar. Falls sich die Position des beweglichen Anschlagelementes 33 innerhalb des Kolbens befindet, stellt der Kreis 49 in Fig. 3 die Innenkontur des kleinsten möglichen Kolbens dar. Unter der Schwingebene ε wird hier jene die Längsachse 1a der Pleuelstange 1 beinhaltende Ebene verstanden, welche normal zu der Achse 12a, 13a des kleinen bzw. großen Pleuelauges 12, 13 verläuft. Das kleine Pleuelauge 12 dient zur Anbindung an einen - nicht weiter dargestellten - Kolben, das große Pleuelauge 13 zur Anbindung an eine - nicht weiter dargestellte - Kurbelwelle.

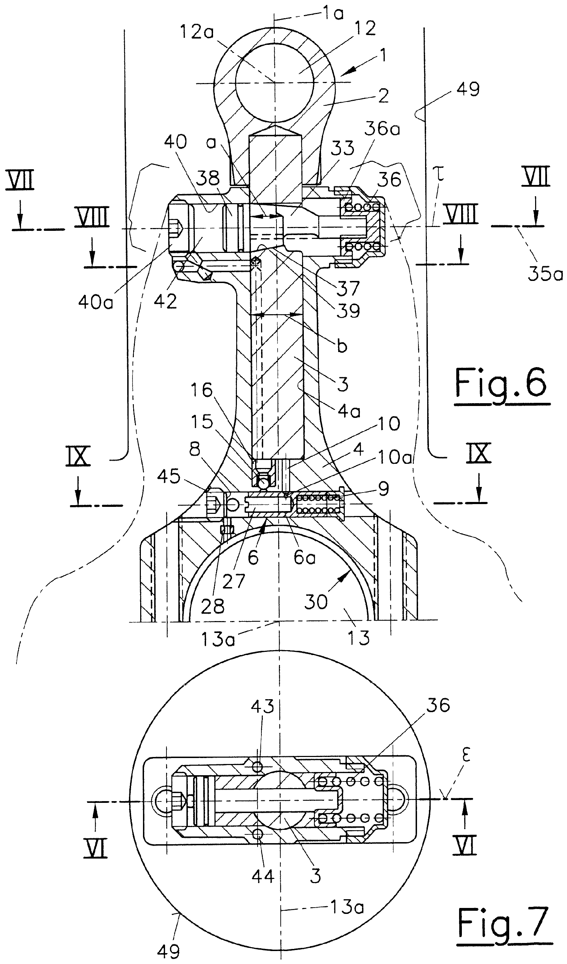

In manchen Fällen, beispielsweise bei kurzhubigen Kolbenmaschinen mit relativ großen Kurbelwangenradien, kann es vorteilhaft sein, die Achse 35a der Querbohrung 35 in der Schwingebene ε der Pleuelstange 1 anzuordnen, wie in Fig. 6 bis Fig. 9 gezeigt ist. Dadurch können die Pleuelstangen in Richtung der Pleuelaugenachsen recht schlank ausgeführt werden. Um die Breite der Pleuelstange 1 in der Auslenkrichtung des Anschlagelementes 33 so klein wie möglich zu halten, kann es vorteilhaft sein, die axiale Erstreckung a der Keilfläche 37, 37a und der Gegenfläche 39 geringer - beispielsweise um mindestens 1/4, oder 1/3 geringer auszuführen, als die Dicke b des Kolbenelementes 3, beides gemessen in Richtung der Achse der Querbohrung, wie in Fig. 6 ersichtlich ist. Die Füll- und Ablaufbohrungen 43, 44 sind in dieser Variante beidseitig außerhalb der durch die Längsachse 1a der Pleuelstange 1 verlaufenden Schwingebene ε der Pleuelstange 1 angeordnet, wie in Fig. 8 und Fig. 9 dargestellt ist.

Die Fig. 10 und Fig. 11 zeigen eine Variante mit einem zweiten Ausführungsbeispiel für das Steuerventil 6, welche sich von dem in den Fig. 6 bis Fig. 9 dargestellten Ausführungsbeispiel dadurch unterscheidet, dass das Steuerventil 6 als Kugelventil 60 mit einer Ventilkugel 61 und einem in einer Aufnahmebohrung 62 axial verschiebbaren Zylinderbolzen 63 ausgebildet ist, welcher samt Ventilkugel 61 durch eine Rückstellfeder 64 in eine erste Stellung und durch Öldruck entgegen der Kraft der Rückstellfeder 64 in eine zweite Stellung verschiebbar ist. Zwischen dem Hochdruckraum 4b und der Aufnahmebohrung 62 befindet sich der erste Ölkanal 10, welcher durch ein im Boden des Hochdruckraumes 4b ausgehendes Sackloch gebildet ist, in welchem sich eine Stichbohrung zur Aufnahmebohrung 62 befindet. Die Stichbohrung mündet in die Aufnahmebohrung 62, in welcher der axial verschiebbare Zylinderbolzen 63 angeordnet ist, welcher an seinem der Ventilkugel 61 zugewandten Ende einen Stift 65 aufweist, welcher an der Ventilkugel 61 angreift. Die Aufnahmebohrung 62 (bzw. auch der Hochdruckraum 4b über den ersten Ölkanal 10) ist zur Zuführung von Motoröl über eine Verbindungsöffnung 10a und Bohrung(en) 67 mit dem Pleuellager 30 verbunden.

Bei niedrigem Öldruck drückt die Rückstellfeder 64 die Ventilkugel 61 und den Zylinderbolzen 63 mit dem Stift 65 gegen die Verschneidung des ersten Ölkanals 10 mit der Aufnahmebohrung 62 für den Zylinderbolzen 63 und dichtet den Hochdruckraum 4b unterhalb des Kolbenelementes 3 ab (erste Stellung des Steuerventils 6). Durch die Massenkraft wird das Kolbenelement 3 angehoben und die Ventilkugel 61 vom Ventilsitz abgehoben, wodurch Öl in den Hochdruckraum 4b gelangt. Ein im ersten Ölkanal 10 ausgeführter Anschlag 66 verhindert, dass die Ventilkugel 61 den Ölkanal 10 verlässt (zweite Stellung des Steuerventils 6). Wenn der Öldruck seinen Schaltwert überschreitet, wird der Zylinderbolzen 63 in den Fig. 10 und Fig. 11 nach rechts gedrückt und die Ventilkugel 61 gibt die Ablauföffnung 10a aus dem Hochdruckraum 4b frei. Das Hochdrucköl (welches etwa den 20-fachen Brennraumdruck aufweist) gelangt über die Bohrungen 67 in die Füllbohrung 43 und von dort in den Druckraum 42 des Anschlagelementes 33, der von diesem Druck nach rechts geschoben wird und die Kolbenstange 3 des Stangenteils 2 kraftschlüssig festhält.

Wenn der Öldruck abgesenkt wird, expandiert die Rückstellfeder 64 und die Ventilkugel 61 gelangt wieder an jene Stelle, wo sie den Hochdruckraum 4b abdichtet. Bei jedem zweiten Abwärtshub wird der Stangenteil 2 samt Kolbenstange 3 nach oben gezogen und die Ventilkugel 61 abgehoben, wodurch der Hochdruckraum 4b mit Öl gefüllt wird und sich eine höhere Verdichtung einstellt.

## Patentansprüche

1. Längenverstellbare Pleuelstange (1) für eine Hubkolbenmaschine, insbesondere Brennkraftmaschine, mit zumindest einem ersten und einem zweiten Stangenteil (2, 4), welche beiden Stangenteile (2, 4) teleskopartig zu- und/ oder ineinander verschiebbar sind, wobei der zweite Stangenteil (4) einen Führungszylinder (4a) und der erste Stangenteil (2) ein im Führungszylinder (4a) längsverschiebbares Kolbenelement (3) ausbildet, wobei zwischen dem ersten und dem zweiten Stangenteil (2, 4) ein Hochdruckraum (4b) aufgespannt ist, in den zumindest ein erster Ölkanal (10) einmündet, wobei die beiden Stangenteile (2, 4) in zumindest einer vorzugsweise einer minimalen Länge der Pleuelstange (1) entsprechenden Stellung durch eine Sperreinrichtung (32) relativ zueinander fixierbar sind, **dadurch gekennzeichnet, dass** die Sperreinrichtung (32) ein bewegliches Anschlagelement (33) aufweist, welches quer zur Längsachse (1a) der Pleuelstange (1) in einer Querbohrung (35) des Kolbenelementes (3) verschiebbar angeordnet ist, wobei das Anschlagelement (33) zumindest eine bezüglich einer Normalebene (τ) auf die Längsachse (1a) der Pleuelstange (1) geneigte Keilfläche (37; 37a, 37b) aufweist, welche mit einer Gegenfläche (39) des Kolbenelementes (3) zusammenwirkt.

2. Pleuelstange (1) nach Anspruch 1, **dadurch gekennzeichnet, dass** das Anschlagelement (33) entgegen der Kraft einer Rückstellfeder (36) verschiebbar ist.

3. Pleuelstange (1) nach Anspruch 1 oder 2, **dadurch gekennzeichnet, dass** die Gegenfläche (39) des Kolbenelementes (3) parallel zur Keilfläche (37; 37a, 37b) ausgebildet ist, wobei vorzugsweise die Keilfläche (37; 37a, 37b) dem Hochdruckraum (4b) zugewandt ist.

4. Pleuelstange (1) nach einem der Ansprüche 1 bis 3, **dadurch gekennzeichnet, dass** die Keilfläche (37) geteilt ausgeführt ist und zwei parallel zur Gegenfläche (39) ausgebildete, in Richtung der Achse (35a) der Querbohrung (35) nebeneinander angeordnete Teilkeilflächen (37a, 37b) aufweist, wobei zwischen den beiden Teilkeilflächen ein Absatz (37c) ausgebildet ist.

5. Pleuelstange (1) nach Anspruch 3 oder 4, **dadurch gekennzeichnet, dass** die axiale Erstreckung (a) der Keilfläche (37) bzw. zumindest einer Teilkeilfläche (37a, 37b) und/oder der Gegenfläche (39) - vorzugsweise um mindestens 1/4, besonders vorzugsweise mindestens 1/3 - geringer ist, als die Dicke (b) des Kolbenelementes (3), beides gemessen in Richtung der Achse (35a) der Querbohrung (35).

6. Pleuelstange (1) nach einem der Ansprüche 1 bis 5, **dadurch gekennzeichnet, dass** das Anschlagelement (33) einen in einem Anschlagzylinder (40) verschiebbar gelagerten Anschlagkolben (38) aufweist oder mit diesem verbunden ist, wobei zwischen Anschlagkolben (38) und Anschlagzylinder (40) ein über zumindest eine Füllbohrung (43, 43a, 43b) mit Öl beaufschlagbarer Druckraum (42) ausgebildet ist.

7. Pleuelstange (1) nach Anspruch 6, **dadurch gekennzeichnet, dass** der Druckraum (42) mit zumindest einer Ablaufbohrung (44, 44a, 44b) strömungsverbindbar ist.

8. Pleuelstange (1) nach einem der Ansprüche 1 bis 7, **dadurch gekennzeichnet, dass** die Querbohrung (35) in einem ein kleines Pleuelauge (12) aufweisenden oberen Drittel der Pleuelstange (1) angeordnet ist.

9. Pleuelstange (1) nach einem der Ansprüche 1 bis 8, **dadurch gekennzeichnet, dass** die Achse (35a) der Querbohrung (35) normal zu einer Schwingebene (ε) der Pleuelstange (1) - vorzugsweise normal zu einer Längsachse (1a) der Pleuelstange (1) - angeordnet ist.

10. Pleuelstange (1) nach einem der Ansprüche 1 bis 8, **dadurch gekennzeichnet, dass** die Achse (35a) der Querbohrung (35) in einer Schwingebene (ε) der Pleuelstange (1) - vorzugsweise normal zu einer Längsachse (1a) der Pleuelstange (1) - angeordnet ist.

11. Pleuelstange (1) nach einem der Ansprüche 1 bis 10, **dadurch gekennzeichnet, dass** im ersten Ölkanal (10) zumindest ein Ventil, vorzugsweise ein Steuerventil (6), angeordnet ist.

12. Pleuelstange (1) nach Anspruch 11, **dadurch gekennzeichnet, dass** das Ventil eine erste Stellung und eine zweite Stellung aufweist, wobei in der ersten Stellung der erste Ölkanal (10) geschlossen, und in der zweiten Stellung der erste Ölkanal (10) geöffnet ist.

13. Pleuelstange (1) nach Anspruch 11 oder 12, **dadurch gekennzeichnet, dass** das Ventil als Kugelventil (60) mit einer Ventilkugel (61) und einem in einer Aufnahmebohrung (62) axial verschiebbaren Zylinderbolzen (63) ausgebildet ist, welcher samt Ventilkugel (61) durch eine Rückstellfeder (64) in eine erste Stellung und durch Öldruck entgegen der Kraft der Rückstellfeder (64) in eine zweite Stellung verschiebbar ist.

14. Pleuelstange (1) nach Anspruch 11 oder 12, **dadurch gekennzeichnet, dass** das Ventil mit einem in einer Aufnahmebohrung (7) axial verschiebbaren Stellkolben (6a) ausgebildet ist, welcher durch eine Rückstellfeder (9) in eine erste Stellung und durch Öldruck entgegen der Kraft der Rückstellfeder (9) in eine zweite Stellung verschiebbar ist.

15. Pleuelstange (1) nach einem der Ansprüche 11 bis 14, **dadurch gekennzeichnet, dass** der erste Ölkanal (10) als Zu- und Abflusskanal ausgebildet ist.

16. Pleuelstange (1) nach einem der Ansprüche 11 bis 15, **dadurch gekennzeichnet, dass** in den Hochdruckraum (4b) ein als Zuführkanal ausgebildeter zweiter Ölkanal (15) einmündet, in welchem ein in Richtung des Hochdruckraumes (4b) öffnendes Rückschlagventil (16) angeordnet ist.

17. Pleuelstange (1) nach einem der Ansprüche 13 bis 16, **dadurch gekennzeichnet, dass** in die Aufnahmebohrung (7, 62) ein vorzugsweise mit dem Pleuellager (30) strömungsverbundener Ölversorgungskanal (17) einmündet, wobei besonders vorzugsweise im Ölversorgungskanal (17) eine Drosselstelle (28) angeordnet ist.

18. Pleuelstange (1) nach Anspruch 16 oder 17, **dadurch gekennzeichnet, dass** der zweite Ölzuführkanal (15) von der Aufnahmebohrung (7) des Steuerventils (6) oder vom Ölversorgungskanal (17) ausgeht.

19. Pleuelstange (1) nach einem der Ansprüche 12 bis 18, **dadurch gekennzeichnet, dass** die Aufnahmebohrung (7, 62) durch eine Bohrung quer zur Längsachse (1a) der Pleuelstange (1) gebildet ist.

20. Pleuelstange (1) nach einem der Ansprüche 11 bis 19, **dadurch gekennzeichnet, dass** das Steuerventil (6) im Bereich eines Pleuellagers (30) der Pleuelstange (1) angeordnet ist.

21. Pleuelstange (1) nach einem der Ansprüche 13 bis 20, **dadurch gekennzeichnet, dass** zumindest eine Füllbohrung (43) durch den Stellkolben (6a) des Steuerventils (6) steuerbar ist, wobei die Füllbohrung (43) in der zweiten Stellung des Stellkolbens (6a) aufgesteuert und in der ersten Stellung des Stellkolbens (6a) geschlossen ist.

22. Pleuelstange (1) nach einem der Ansprüche 13 bis 21, **dadurch gekennzeichnet, dass** zumindest eine Ablaufbohrung (44) durch den Stellkolben (6a) des Steuerventils (6) steuerbar ist, wobei die Ablaufbohrung (44) in der ersten Stellung des Stellkolbens (6a) aufgesteuert und in der zweiten Stellung des Stellkolbens (6) geschlossen ist.

23. Pleuelstange (1) nach einem der Ansprüche 12 bis 22, **dadurch gekennzeichnet, dass** in der ersten Stellung des Zylinderbolzens (63) oder des Stellkolbens (6a) das Öldruckniveau niedriger als in der zweiten Stellung des Zylinderbolzens (63) bzw. Stellkolbens (6a) ist.

## Claims

1. A length-adjustable connecting rod (1) for a reciprocating-piston machine, in particular for an internal combustion engine, comprising at least one first and one second rod part (2, 4), which both rod parts (2, 4) can be pushed together and/or inside one another in a telescoping manner, wherein the second rod part (4) forms a guide cylinder (4a) and the first rod part (2) forms a piston element (3) which can be longitudinally displaceable in the guide cylinder (4a), wherein a high-pressure chamber (4b) stretches between the first and the second rod part (2, 4), into which at least one first oil duct (10) opens, wherein the two rod parts (2, 4), in at least one position preferably corresponding to a minimum length of the connecting rod (1), can be fixed relative to each other by a locking device (32), **characterized in that** the locking device (32) comprises a movable stop element (33) which is displaceably arranged transversely to the longitudinal axis (1a) of the connecting rod (1) in a transverse borehole (35) of the piston element (3), wherein the stop element (33) comprises at least one wedge surface (37; 37a, 37b) which is inclined with respect to a normal plane (T) on the longitudinal axis (1a) of the connecting rod (1) and which interacts with a counter surface (39) of the piston element (3).

2. A connecting rod (1) according to claim 1, **characterized in that** the stop element (33) is displaceable against the force of a restoring spring (36).

3. A connecting rod (1) according to claim 1 or 2, **characterized in that** the counter surface (39) of the piston element (3) is formed parallel to the wedge surface (37; 37a, 37b), wherein preferably the wedge surface (37; 37a, 37b) faces the high-pressure chamber (4b).

4. A connecting rod (1) according to one of the claims 1 to 3, **characterized in that** the wedge surface (37) is formed in a divided manner and comprises two partial wedge surfaces (37a, 37b) which are formed parallel to the counter surface (39) and are arranged adjacent to each other in the direction of the axis (35a) of the transverse borehole (35), wherein a shoulder (37c) is formed between the two partial wedge surfaces.

5. A connecting rod (1) according to claim 3 or 4, **characterized in that** the axial extension (a) of the wedge surface (37) or at least one partial wedge surface (37a, 37b) and/or the counter surface (39) is lower, preferably by at least 1/4, more preferably by at least 1/3, than the thickness (b) of the piston element (3), both measured in the direction of the axis (35a) of the transverse borehole (35).

6. A connecting rod (1) according to one of the claims 1 to 5, **characterized in that** the stop element (33) comprises a stop piston (38) which is displaceably mounted in a stop cylinder (40), or is connected thereto, wherein a pressure chamber (42) is formed between the stop piston (38) and the stop cylinder (40), which pressure chamber can be supplied with oil via at least one filling borehole (43, 43a, 43b).

7. A connecting rod (1) according to claim 6, **characterized in that** the pressure chamber (42) can be flow-connected to at least one discharge borehole (44, 44a, 44b).

8. A connecting rod (1) according to one of the claims 1 to 7, **characterized in that** the transverse borehole (35) is arranged in an upper third of the connecting rod (1) having a rod small-end (12).

9. A connecting rod (1) according to one of the claims 1 to 8, **characterized in that** the axis (35a) of the transverse borehole (35) is arranged normally to an oscillating plane (ε) of the connecting rod (1), preferably normally to a longitudinal axis (1a) of the connecting rod (1).

10. A connecting rod (1) according to one of the claims 1 to 8, **characterized in that** the axis (35a) of the transverse borehole (35) is arranged in an oscillating plane (ε) of the connecting rod (1), preferably normally to a longitudinal axis (1a) of the connecting rod (1).

11. A connecting rod (1) according to one of the claims 1 to 10, **characterized in that** at least one valve, preferably a control valve (6), is arranged in the first oil duct (10).

12. A connecting rod (1) according to claim 11, **characterized in that** the valve has a first position and a second position, wherein the first oil duct (10) is closed in the first position and the first oil duct (10) is open in the second position.

13. A connecting rod (1) according to claim 11 or 12, **characterized in that** the valve is arranged as a ball valve (60) with a valve ball (61) and a cylinder pin (63) which is axially displaceable in a receiving borehole (62) and which is displaceable together with the valve ball (61) to a first position by a restoring spring (64) and to a second position by oil pressure against the force of the restoring spring (64).

14. A connecting rod (1) according to claim 11 or 12, **characterized in that** the valve is arranged with an actuating piston (6a) which is axially displaceable in a receiving borehole (7) and which is displaceable to a first position by a restoring spring (9) and to a second position by oil pressure against the force of the restoring spring (9).

15. A connecting rod (1) according to one of the claims 11 to 14, **characterized in that** the first oil duct (10) is arranged as a feed and discharge channel.

16. A connecting rod (1) according to one of the claims 11 to 15, **characterized in that** a second oil duct (15) arranged as a feed channel opens into the high-pressure chamber (4b) in which a non-return valve (16) that opens in the direction of the high-pressure chamber (4b) is arranged.

17. A connecting rod (1) according to one of the claims 13 to 16, **characterized in that** an oil supply channel (17) which is preferably flow-connected to the connecting-rod bearing (30) opens into the receiving borehole (7, 62), wherein a throttling point (28) is arranged in an especially preferable way in the oil supply channel (17).

18. A connecting rod (1) according to claim 16 or 17, **characterized in that** the second oil supply channel (15) originates from the receiving borehole (7) of the control valve (6) or from the oil supply channel (17).

19. A connecting rod (1) according to one of the claims 12 to 18, **characterized in that** the receiving borehole (7, 62) is formed by a borehole transversely to the longitudinal axis (1a) of the connecting rod (1).

20. A connecting rod (1) according to one of the claims 11 to 19, **characterized in that** the control valve (6) is arranged in the region of a connecting-rod bearing (30) of the connecting rod (1).

21. A connecting rod (1) according to one of the claims 13 to 20, **characterized in that** at least one filling borehole (43) can be controlled by the actuating piston (6a) of the control valve (6), wherein the filling borehole (43) is piloted open in the second position of the actuating piston (6a) and is closed in the first position of the actuating piston (6a).

22. A connecting rod (1) according to one of the claims 13 to 21, **characterized in that** at least one discharge borehole (44) can be controlled by the actuating piston (6a) of the control valve (6), wherein the discharge borehole (44) is piloted open in the first position of the actuating piston (6a) and closed in the second position of the actuating piston (6a).

23. A connecting rod (1) according to one of the claims 12 to 22, **characterized in that** the oil pressure level is lower in the first position of the cylinder pin (63) or the actuating piston (6a) than in the second position of the cylinder pin (63) or the actuating piston (6a).

## Revendications

1. Bielle (1) de longueur réglable destinée à un moteur à pistons alternatifs en particulier un moteur à combustion interne ayant au moins une première et une seconde parties de bielle (2, 4) pouvant coulisser télescopiquement l'une par rapport à l'autre et/ou l'une dans l'autre, la seconde partie de bielle (4) formant un cylindre de guidage (4a) et la première partie de bielle (2) formant un élément de piston (3) susceptible de coulisser longitudinalement dans le cylindre de guidage (4a), entre la première et la seconde parties de bielle (2, 4) étant insérée une chambre haute pression (4b) dans laquelle débouche au moins un premier canal d'huile (10), les deux parties de bielle (2, 4) pouvant être fixées l'une par rapport à l'autre par un dispositif de blocage dans au moins une position correspondant de préférence à la longueur minimum de la bielle (1),
**caractérisée en ce que**
le dispositif de blocage (32) comprend un élément de butée mobile (33) qui est monté coulissant transversalement à l'axe longitudinal (1a) de la bielle (1) dans un perçage transversal (35) de l'élément de piston (3), l'élément de butée (33) comprenant, au moins une surface en forme de coin (37, 37a, 37b) inclinée sur l'axe normal (τ) sur l'axe longitudinal (1a) de la bielle (1) qui coopère avec une surface antagoniste (39) de l'élément de piston (3).

2. Bielle (1) conforme à la revendication 1,
**caractérisée en ce que**
l'élément de butée (33) peut coulisser contre la force d'un ressort de rappel (36).

3. Bielle (1) conforme à la revendication 1 ou 2,
**caractérisée en ce que**
la surface antagoniste (39) de l'élément de piston (3) est réalisée parallèlement à la surface en forme de coin (37, 37a, 37b), et de préférence la surface en forme de coin (37, 37a, 37b) est tournée vers la chambre haute pression (4b).

4. Bielle (1) conforme à l'une des revendications 1 à 3,
**caractérisée en ce que**
la surface en forme de coin (37) est subdivisée et comporte deux surfaces en coin partielles (37a, 37b) parallèles à la surface antagoniste (39) et situées côte à côte en direction de l'axe (35a) du perçage transversal (35), un talon (37c) étant formé entre les deux surfaces en coin partielles.

5. Bielle (1) conforme à la revendication 3 ou 4,
**caractérisée en ce que**
l'extension axiale (a) de la surface en coin (37) ou d'au moins l'une des surfaces en coin partielles (37a, 37b) et/ou de la surface antagoniste (39) - est inférieure - de préférence d'au moins 1/4 et de façon particulièrement préférentielle, d'au moins 1/3 - à l'épaisseur (b) de l'élément de piston (3), toutes deux mesurées dans la direction de l'axe (35a) du perçage transversal (35).

6. Bielle (1) conforme à l'une des revendications 1 à 5,
**caractérisée en ce que**
l'élément de butée (33) comporte un piston de butée (38) monté coulissant dans un cylindre de butée (40) ou est relié à celui-ci, et entre le piston de butée (38) et le cylindre de butée (40) est formée une chambre de pression (42) pouvant être alimentée en huile par l'intermédiaire d'au moins un perçage de remplissage (43, 43a, 43b).

7. Bielle (1) conforme à la revendication 6,
**caractérisée en ce que**
la chambre de pression (42) peut être en liaison fluidique avec au moins un perçage d'évacuation (44, 44a, 44b).

8. Bielle (1) conforme à l'une des revendications 1 à 7,
**caractérisée en ce que**
le perçage transversal (35) est situé dans le tiers supérieur de la bielle (1) qui comporte un petit oeil de tête de bielle (12).

9. Bielle (1) conforme à l'une des revendications 1 à 8,
**caractérisée en ce que**
l'axe (35a) du perçage transversal (35) est perpendiculaire au plan de pivotement (ε) de la bielle (1) - de préférence perpendiculaire à l'axe longitudinal (1a) de la bielle (1) -.

10. Bielle (1) conforme à l'une des revendications 1 à 8,
**caractérisée en ce que**
l'axe (35a) du perçage transversal (35) est situé dans le plan de pivotement (ε) de la bielle (1) - de préférence perpendiculaire à l'axe longitudinal (1a) de la bielle (1) -.

11. Bielle (1) conforme à l'une des revendications 1 à 10,
**caractérisée en ce que**
dans le premier canal d'huile (10) est montée au moins une soupape, de préférence une soupape de commande (6).

12. Bielle (1) conforme à la revendication 11,
**caractérisée en ce que**
la soupape a une première position et une seconde position, et dans la première position le premier canal d'huile (10) est fermé tandis que dans la seconde position, le premier canal d'huile (10) est ouvert.

13. Bielle (1) conforme à la revendication 11 ou 12,
**caractérisée en ce que**
la soupape est réalisée sous la forme d'une soupape à bille (60) ayant une bille de soupape (61) et un goujon cylindrique (63) coulissant axialement dans un perçage de réception (62), qui, y compris la bille de soupape (61) peut être déplacée en translation par un ressort de rappel (64) dans une première position et par la pression d'huile, contre la force du ressort de rappel (64) dans une seconde position.

14. Bielle (1) conforme à la revendication 11 ou 12,
**caractérisée en ce que**
la soupape est formée avec un piston de réglage (6a) coulissant axialement dans un perçage de réception (7), qui peut être déplacé en translation par un ressort de rappel (9) dans une première position et par la pression d'huile contre la force de ce ressort de rappel (9) dans une seconde position.

15. Bielle (1) conforme à l'une des revendications 11 à 14,
**caractérisée en ce que**
le premier canal d'huile (10) est réalisé sous la forme d'un canal d'alimentation et d'évacuation.

16. Bielle (1) conforme à l'une des revendications 11 à 15,
**caractérisée en ce que**
dans la chambre haute-pression (4b) débouche un second canal d'huile (15) réalisé sous la forme d'un canal d'alimentation dans lequel est montée une soupape anti-retour (16) s'ouvrant en direction de la chambre haute-pression (4b).

17. Bielle (1) conforme à l'une des revendications 13 à 16,
**caractérisée en ce que**
dans le perçage de réception (7, 62) débouche un canal d'alimentation en huile (17), de préférence en liaison fluidique avec le palier de bielle (30), et de façon particulièrement préférentielle, un étranglement (28) est situé dans le canal d'alimentation en huile (17).

18. Bielle (1) conforme à la revendication 16 ou 17,
**caractérisée en ce que**
le second canal d'alimentation en huile (15) part du perçage de réception (7) de la soupape de commande (6) ou du canal d'alimentation en huile (17).

19. Bielle (1) conforme à l'une des revendications 12 à 18,
**caractérisée en ce que**
le perçage de réception (7, 62) est formé par un perçage transversal à l'axe longitudinal (1a) de la bielle (1).

20. Bielle (1) conforme à l'une des revendications 11 à 19,
**caractérisée en ce que**
la soupape de commande (6) est montée dans la zone d'un palier (30) de la bielle (1).

21. Bielle (1) conforme à l'une des revendications 13 à 20,
**caractérisée en ce qu'**
au moins un perçage de remplissage (43) peut être commandé par le piston de réglage (6a) de la soupape de commande (6) et le perçage de remplissage (43) est commandé dans la seconde position du piston de réglage (6a) et est fermé dans la première position du piston de réglage (6a).

22. Bielle (1) conforme à l'une des revendications 13 à 21,
**caractérisée en ce qu'**
au moins un perçage d'évacuation (44) peut être commandé par le piston de réglage (6a) de la soupape de commande (6), et le perçage d'évacuation (44) est commandé dans la première position du piston de réglage (6a) et est fermé dans la seconde position du piston de réglage (6a).

23. Bielle (1) conforme à l'une des revendications 12 à 22,
**caractérisée en ce que**
dans la première position du goujon cylindrique (63) ou du piston de réglage (6a) le niveau de pression d'huile est plus faible que dans la seconde position du goujon cylindrique (63) ou du piston de réglage (6a).
